Europäisches Patentamt

European Patent Office

Office européen des brevets

(11) Veröffentlichungsnummer: **0 281 981**
**A2**

## (12) EUROPÄISCHE PATENTANMELDUNG

(21) Anmeldenummer: **88103466.4**

(22) Anmeldetag: **05.03.88**

(51) Int. Cl.⁴: **B01D 45/08**

(30) Priorität: **12.03.87 DE 3707919**

(43) Veröffentlichungstag der Anmeldung:
**14.09.88 Patentblatt 88/37**

(84) Benannte Vertragsstaaten:
**AT BE CH DE FR GB IT LI NL SE**

(71) Anmelder: **Fischbach GmbH & Co.KG**
**Verwaltungsgesellschaft**

**D-5908 Neunkirchen/Siegerland 1(DE)**

(72) Erfinder: **Bürger, Willy, Dipl.-Ing.**
**Blumenberg 13**
**D-5221 Friesenhagen(DE)**
Erfinder: **Berscheid, Alfred**
**Oberstrasse 6**
**D-5561 Niederkail(DE)**

(74) Vertreter: **Boecker, Joachim, Dr.-Ing.**
**Rathenauplatz 2-8**
**D-6000 Frankfurt a.M. 1(DE)**

(54) **Tropfenabscheider zum Einbau in einen im wesentlichen senkrecht angeordneten Strömungskanal.**

(57) Tropfenabscheider zum Einbau in einen im wesentlichen senkrecht angeordneten Strömungskanal, der von einem Flüssigkeitstropfen oder Dampf enthaltenden Gas, vorzugsweise Luft, durchströmt wird. Gemäß der Erfindung enthält der Tropfenabscheider (1) einen dem Strömungskanal (2) angepaßten offenen Rahmen (11), der an seiner unteren Seite mit einer nach oben offenen Rinne (12) versehen ist, die sich längs des gesamten oder eines Teils des Umfanges des Rahmens (11) erstreckt. Oberhalb der Rinne (12) sind zwei übereinander liegende Schichten (13, 14) aus Tropfenauffanglamellen (13a, 14a) angeordnet, die mit Abstand voneinander nebeneinander liegen, und um vorzugsweise eine halbe Lamellenteilung parallel zueinander und senkrecht zur Lamellenlängsachse gegeneinander verschoben sind. Die Lamellen (13a, 14a) sind so geformt, daß sie die im Strömungskanal (2) herunterfallenden Tropfen auffangen und die sich auf den Lamellen sammelnde Flüssigkeit in die Rinne (12) abzufließen vermag.

Fig.3

# Tropfenabscheider zum Einbau in einen im wesentlichen senkrecht angeordneten Strömungskanal

Die Erfindung betrifft einen Tropfenabscheider gemäß dem Oberbegriff des Anspruches 1.

Bei vielen technischen Anwendungen, wie beispielsweise in der Klimatechnik, kommt es vor, daß ein Flüssigkeitstropfen enthaltender Luftstrom einen Strömungskanal durchströmt, wobei die durch die Schwerkraft aus dem Luftstrom herausfallenden Flüssigkeitstropfen, in der Regel Wassertropfen, aufgefanden werden müssen. Solche Tropfen entstehen beispielsweise dann, wenn die Luft einen sie kühlenden Wärmetauscher durchströmt, aus dem kondensiertes Wasser unter der Wirkung der Schwerkraft nach unten abläuft.

Das Auffangen dieser Flüssigkeit bereitet keine Schwierigkeiten, wenn der Luftstrom im wesentlichen waagerecht verläuft. Das beispielsweise in einem Wärmetauschers im Strömungskanal kondensierende Wasser sammelt sich dann am Boden des Wärmetauschers und kann von hier abgeführt werden. Schwierigkeiten entstehen jedoch dann, wenn der Luftstrom den Wärmetauscher in senkrechter Richtung durchströmt. Für eine solche Anordnung besteht häufig aus räumlichen und ästhetischen Gründen Bedarf. In diesem Falle können die durch die Schwerkraft nach unten fallenden Tropfen nicht durch eine Wanne aufgefangen werden, da diese den Luftstrom blokkieren würde.

Der Erfindung liegt die Aufgabe zugrunde, einen Tropfenabscheider der eingangs genannten Art zu entwickeln, mit dem im wesentlichen in Strömungsrichtung oder in Gegenströmungsrichtung der Luft nach unten fallende Flüssigkeitstropfen aufgefangen werden können.

Zur Lösung dieser Aufgabe wird ein Tropfenabscheider gemäß dem Oberbegriff des Anspruches 1 vorgeschlagen, welcher erfindungsgemäß die im kennzeichnenden Teil des Anspruches 1 genannten Merkmale hat.

Vorteilhafte Ausgestaltungen der Erfindung sind in den weiteren Ansprüchen genannt.

Anhand der in den Figuren gezeigten Ausführungsbeispiele soll die Erfindung näher erläutert werden. Es zeigen

Figur 1 schematisch die Anordnung eines Tropfenabscheiders gemäß der Erfindung in dem Strömungskanal einer Klimaanlage,

Figur 2 ein Ausführungsbeispiel eines Tropfenabscheiders gemäß der Erfindung in Draufsicht von oben, also in der Richtung, in der die Flüssigkeitstropfen fallen,

Figur 3 einen Schnitt längs der Linie A-A in Figur 2,

Figur 4 einen Schnitt längs der Linie B-B in Figur 2.

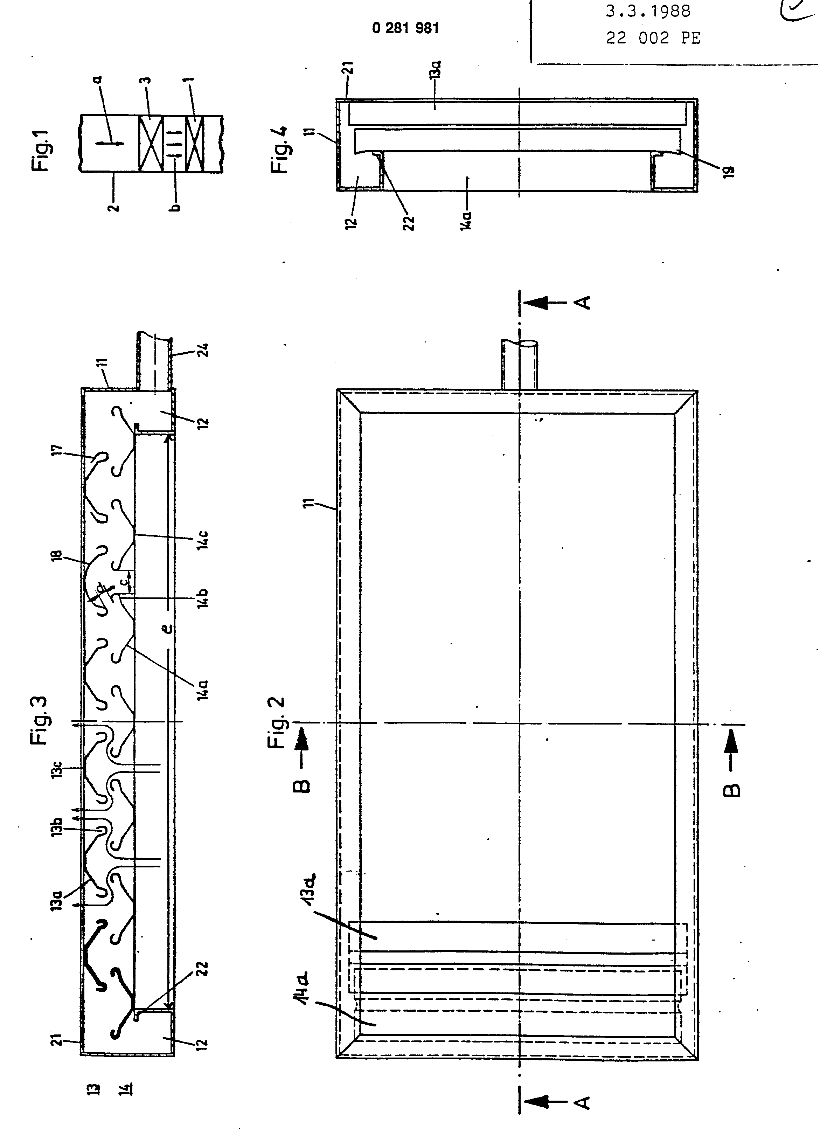

Figur 1 zeigt schematisch ein Beispiel für den Einsatz eines Tropfenabscheiders nach der Erfindung. Ein vertikal angeordneter rechteckiger Strömungskanal wird in der einen oder an deren Richtung des Doppelpfeils a von feuchtigkeitshaltiger Luft durchströmt. Bei dem Strömungskanal kann es sich um einen Teil einer Klimatisierungsanlage handeln. Die Luft durchströmt einen Wärmetauscher 3, in welchem die Luft gekühlt wird. Dabei kommt es zur Kondensation des in der Luft vorhandenen Wasserdampfes, und das Wasser tropft vom Wärmetauscher nach unten ab, wie durch die Pfeile b angedeutet ist. Der unterhalb des Wärmetauschers angeordnete Tropfenabscheider hat die Aufgabe, diese Wassertropfen aufzufangen, ohne daß der Luftstrom durch den Tropfenabscheider in stärkerer Weise behindert wird.

Figur 2 zeigt den Tropfenabscheider aus der Richtung der herunterfallenden Tropfen. Der Tropfenabscheider besteht im wesentlichen aus einem rechteckigen offenen Rahmen 11 und zwei übereinander liegenden Schichten 13, 14 aus Tropfenauffanglamellen 13a, beziehungsweise 14a, wobei die Lamellen jeder Schicht mit Abstand voneinander nebeneinander angeordnet sind. In Figur 2 ist zur Vereinfachung der Darstellung nur je eine Auffanglamelle jeder Schicht dargestellt. Figur 3 zeigt den Aufbau mit sämtlichen Lamellen, wobei diese Lamellen jedoch mit Ausnahme der beiden ganz links dargestellten vereinfacht dargestellt sind. Senkrecht zur Durchströmungsrichtung des Tropfenabscheiders sind die beiden Schichten gegeneinander verschoben, und zwar vorzugsweise um eine halbe Lamellenteilung. Auf diese Weise wird der Durchströmungsquerschnitt des Tropfenabscheiders in der Projektion senkrecht zur Strömungsrichtung vollständig überdeckt.

Die Lamellen 13a, 14a haben im Schnitt senkrecht zu ihrer Längsrichtung eine V-ähnliche Form, wobei die Spitze des V weggeschnitten und durch eine verbindende Basisebene 13c, 14c ersetzt ist. Statt der V-ähnlichen Form kann auch eine Bogenform verwendet werden, wie dies am Beispiel der Lamelle 18 in Figur 3 angedeutet ist. Die Lamellen der unteren Schicht 14 sind nach oben offen, die der oberen Schicht sind nach unten offen.

Der Rahmen 11 ist an seiner unteren Seite mit einer Rinne 12 versehen. In dem gezeigten Ausführungsbeispiel erstreckt sich diese Rinne längs des gesamten Umfanges des Rahmens 11. Die Lamellen münden mit ihren Enden über der Rinne 12 (Figur 4), so daß das in Pfeilrichtung b (Figur 3) in die Rinnen einfallende Wasser nach den Seiten in die Rinne 12 abfließen kann. Wenn die Rinnen zwecks besseren Abfließens des Wassers gegenüber der Horizontalen leicht geneigt sind oder wenn die Rinnen an einem Ende geschlossen sind oder dicht an der Rahmenwand anliegen, genügt es, wenn die Rinne 12 sich nur längs einer Seite des Tropfenabscheiders erstreckt. Um zu verhindern, daß das aus der Lamelle abfließende Wasser durch Adhäsion unterhalb der Lamelle haften bleibt und in die Rahmenöffnung 11 abtropft, sind die Lamellen am Ende mit einer das Abtropfen erleichternden, nach unten gerichteten Ausbiegung 19 (Figur 4) versehen.

Im gezeigten Ausführungsbeispiel ist der Rahmen mit der Rinne durch Biegung eines einziges Blechstreifens hergestellt. Dieser ist an der oberen Seite einmal und an der unteren Seite zur Bildung der Rinne 12 dreimal rechtwinklig abgebogen. Die beiden äußersten Abbiegungen 22, 23 des den Rahmen bildenden Bleches dienen zur Befestigung der Lamellen 13a, 14a, wie dies aus Figur 4 ersichtlich ist. Der Rahmen 11 ist ferner mit einem Ablaufstutzen 24 für das sich in der Rinne 12 sammelnde Wasser versehen.

An den Rändern ihrer langen Seiten sind die Lamellen 13a, 14a mit Abbiegungen 13b, 14b versehen, die bei den Lamellen der unteren Schicht 14 im Sinne des V oder des Bogens nach innen und bei den Lamellen der oberen Schicht 13 im Sinne des V oder des Bogens nach außen verlaufen. Diese Abbiegungen haben im wesentlichen einen halbkreisförmigen Quer schnitt. Die Abbiegungen verhindern, daß der Luftstrom, wenn er in Richtung der fallenden Tropfen verläuft, die auf den Lamellenwänden aufprallenden Tropfen an den freien Enden der Lamellenwand wieder abreißen und mit sich führen kann. Zur Verbesserung dieser Wirkung können die halbkreisförmigen Abbiegungen 13b an ihrem freien Ende noch mit einem kurzen geraden Abschnitt 17 versehen sein. Wenn der Luftstrom sich in Gegenrichtung zu den fallenden Tropfen bewegt, ist die eben genannte Gefahr nicht vorhanden.

Je mehr Lamellen bei einem Tropfenabscheider mit gegebenen Abmessungen vorhanden sind, um so niedriger wird der Tropfenabscheider. Eine Grenze ist jedoch dadurch gesetzt, daß bei zu niedriger Ausführung die Lamellen nicht mehr tief genug sind, um genügend Wasser abzuführen. Bei der gegenseitigen Anordnung der Lamellen zueinander ist darauf zu achten, daß ungefähr die Bedingung erfüllt ist, daß c (Figur 3) etwa gleich 2d ist. Die Summe aller Abstände c soll etwa ein Drittel bis ein Viertel der Gesamtbreite e des freien Durchtrittsquerschnitts des Rahmens 11 betragen.

## Ansprüche

1. Tropfenabscheider zum Einbau in einen im wesentlichen senkrecht angeordneten Strömungskanal, der von einem Flüssigkeitstropfen oder Dampf enthaltenden Gas, vorzugsweise Luft, durchströmt wird, **dadurch gekennzeichnet**, daß der Tropfenabscheider (1) einen dem Strömungskanal (2) angepaßten offenen Rahmen (11) enthält, der an seiner unteren Seite mit einer nach oben offenen Rinne (12) versehen ist, die sich längs des gesamten oder eines Teils des Umfanges des Rahmens (11) erstreckt, daß oberhalb der Rinne (12) zwei übereinander liegende Schichten (13, 14) aus Tropfenauffanglamellen (13a, 14a), die mit Abstand voneinander nebeneinander liegen, angeordnet sind und um vorzugsweise eine halbe Lamellenteilung parallel zueinander und senkrecht zur Lamellenlängsachse gegeneinander verschoben sind, und daß die Lamellen (13a, 14a) so geformt sind, daß sie die im Strömungskanal (2) herunterfallenden Tropfen auffangen und die sich auf den Lamellen sammelnde Flüssigkeit in die Rinne (12) abzufließen vermag.

2. Tropfenabscheider nach Anspruch 1, **dadurch gekennzeichnet**, daß die Lamellen (13a, 14a) mit ihren Enden direkt am Rahmen (11) befestigt sind.

3. Tropfenabscheider nach Anspruch 1 oder 2, **dadurch gekennzeichnet**, daß die Auffanglamellen (15, 16) im Querschnitt senkrecht zu ihrer Längsachse V-förmig oder bogenförmig ausgebildet sind, wobei die Spitze des V beziehungsweise des Bogens abgeplattet ist, und daß die Lamellen der unteren Schicht (14) mit der Öffnung des V beziehungsweise des Bogens nach oben und die Lamelle (13a) der oberen Schicht (13) mit der Öffnung des V beziehungsweise des Bogens nach unten angeordnet sind.

4. Tropfenabscheider nach einem der vorhergehenden Ansprüche, **dadurch gekennzeichnet**, daß die Schenkel der V-förmigen oder bogenförmigen Auffanglamelle an ihren freien Enden mit Abbiegungen (13b, 14b) versehen sind, die bei der unteren Schicht (14) im Sinne des V beziehungsweise des Bogens nach innen und bei der oberen Schicht (13) im Sinne des V beziehungsweise des Bogens nach außen verlaufen.

5. Tropfenabscheider nach Anspruch 4, **dadurch gekennzeichnet**, daß die Abbiegungen (13b, 14b) im Längsquerschnitt der Lamelle im wesentlichen halbkreisförmig ausgebildet sind.

6. Tropfenabscheider nach Anspruch 4 oder 5, **dadurch gekennzeichnet**, daß sich an die freien Enden der bogenförmigen Abbiegungen (13b, 14b) ein kurzer gerader Abschnitt (17) anschließt.

7. Tropfenabscheider nach einem der vorhergehenden Ansprüche, **dadurch gekennzeichnet,** daß die Lamellen aus Blech bestehen.

8. Tropfenabscheider nach einem der vorhergehenden Ansprüche, **dadurch gekennzeichnet,** daß der Querschnitt des Rahmens (11) aus einem Blech besteht, daß an seiner einen Seite einmal und an seiner anderen Seite mindestens zweimal rechtwinklig nach derselben Seite abgebogen ist.

9. Tropfenabscheider nach Anspruch 8, **dadurch gekennzeichnet,** daß die Lamellen der oberen Lamellenschicht (13) an der Unterseite der oberen Abwinklung (21) des Rahmenbleches befestigt sind und die Lamellen (14a) der unteren Lamellenschicht (14) an der unteren Abwinklung des Rahmenblechs befestigt sind.

10. Tropfenabscheider nach Anspruch 9, **dadurch gekennzeichnet,** daß der untere Rand des Rahmenbleches dreimal im wesentlichen rechtwinklig abgebogen ist, wobei die an dieser Abbiegung befestigten Lamellen (14a) der unteren Schicht (14) auf der über der Rinne (12) liegenden äußersten Abbiegung (22) ruhen.

11. Tropfenabscheider nach einem der vorhergehenden Ansprüche, **dadurch gekennzeichnet,** daß die Rinne (12) des Rahmens mit mindestens einem Ablaufstutzen (24) für aufgefangene Flüssigkeit versehen ist.

Fig. 3

Fig. 1

Fig. 2

Fig. 4

0 281 981

3.3.1988
22 002 PE

6/2392